# EUROPEAN PATENT APPLICATION

(11) **EP 0 760 278 A1**
(43) Date of publication of application: **05.03.1997**
(21) Application number: 96306152.8
(22) Date of filing: 22.08.1996
(51) Int. Cl.: B29C 47/10

(54) **Process for extruding a polyethylene**

(30) Priority: 01.09.1995 FR 9510501
(71) Applicant: BP Chemicals Limited, London EC2M 7BA (GB); BP CHEMICALS S.N.C., 92400 Courbevoie (FR)
(72) Inventor: Kuhlburger, Jean-Jacques, 13117 Lavera (FR)
(74) Representative: Hymers, Ronald Robson

(57) **Abstract**

The present invention relates to a process for extruding, under a controlled atmosphere made up of inert gas, a polyethylene mixed with and/or containing a reactive gas liable to react with the polyethylene in the extrusion conditions, in an extruder fed with polyethylene by a feed hopper. The process is characterised in that an inert purging gas is introduced into the extruder in a zone where the polyethylene is not completely melted and at a distance from the feed hopper such that the inert purging gas introduced forms a gas mixture with the reactive gas entrained with the polyethylene into the extruder and then flows back in the direction of the feed hopper countercurrentwise to the flow of the polyethylene and is discharged out of the extruder.

## Description

The present invention relates to a process for extruding a polyethylene mixed with and/or containing a reactive gas.

The temperatures to which polyethylene is subjected in an extruder are generally high and can reach 300°C locally. If no precaution is taken, the oxygen entrained with the polyethylene can give rise to all kinds of uncontrolled degradations of the polyethylene, such as yellowing, crosslinking or a change in the molecular mass of the polyethylene. Two measures are generally taken to reduce the oxidation and degradation phenomena: antioxidants are added to the polyethylene and the polyethylene is subjected to purging with an inert gas such as nitrogen.

It is known to perform the purging of the polyethylene with an inert gas such as nitrogen in the feed hopper of the extruder. However, this process has the disadvantage of using large quantities of inert gas to obtain the desired oxygen contents, for example from 1 to 3 % by volume of oxygen, in the gas mixture flowing back into the solid transport or melting zones of the extruder. It has been observed, in fact, that purging in the feed hopper is very often insufficient to remove the oxygen present particularly in the pores of the polyethylene when the latter is in the form of a porous powder. Furthermore, it has been noted that the gradual increase in the apparent density of the polyethylene during its flow from the feed hopper to the exit die of the extruder creates a countercurrent of gas which escapes from the extruder, generally through the feed hopper. This countercurrent makes the purging of the polyethylene and, finally, its degassing difficult and, to be effective, requires the use of large and costly quantities of inert gas.

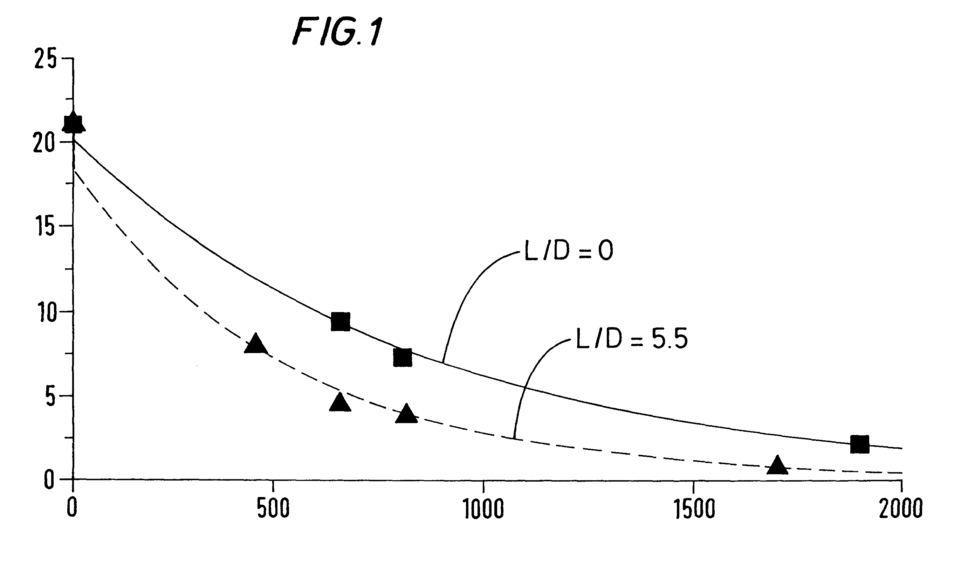

US-A-4,142,040 of Jabarin et al. discloses a process for extruding a molten grade saturated polyester comprising minimising acetaldehyde formation by excluding essentially all gaseous elemental oxygen by means of inert gas. Fig. 1 discloses an embodiment wherein poly(ethylene terephthalate) is extruded and an inert gas, such as nitrogen, is introduced through one or more conduits into the bottom of the hopper or through one or more conduits into the feeding zone (or both).

A process has now been found which allows a polyethylene to be extruded under a controlled atmosphere made up of inert gas, using substantially smaller quantities of inert gas. Furthermore, the process allows the polyethylene to be extruded in the presence of a much smaller quantity of antioxidant.

The process is particularly useful when, prior to being extruded, the polyethylene has been brought into contact with a reactive gas, in particular with oxygen, for example the oxygen present in air, especially during degassing, pneumatic conveying or storage operations of the polyethylene. The process is suitable especially for converting a polyethylene in the form of a porous powder into granules, or directly into finished objects. In the first case the extruder is a granulator, in the second case it may be of the blow-extrusion type or else an extruder for sections. Furthermore, the process of the invention has the advantage of improving the organoleptic properties of the extruded polyethylene.

The subject of the present invention is therefore a process for extruding, under a controlled atmosphere made up of inert gas, a polyethylene especially in the form of a porous powder, mixed with and/or containing a reactive gas such as oxygen, capable of reacting with the polyethylene in the extrusion conditions, in an extruder fed with polyethylene by a feed hopper, a process characterised in that an inert purging gas is introduced into the extruder in a zone where the polyethylene is not completely melted and at a distance from the feed hopper such that the inert purging gas introduced forms a gas mixture with the reactive gas entrained with the polyethylene into the extruder, and then flows back in the direction of the feed hopper countercurrentwise to the flow of the polyethylene and is discharged out of the extruder.

Figure 1 shows a graph expressing, as ordinate, a percentage of oxygen by volume in the gas mixture flowing back in the extruder and employed subsequently in the example and, as abscissa, the flow rate of purging nitrogen in Nl/h.

The process of the invention therefore consists in treating the polyethylene thermomechanically in an extruder under certain specific conditions. The extruder generally comprises one, two or several screws and various zones such as described on pages 108 to 116 of the "Precis de Matières Plastiques, Structures, Propriétés, Mise en oeuvre et normalisation" ["Summary of Plastic Materials, Structures, Properties, Use and standardization"], 5th edition (1993), published by AFNOR and Nathan (Paris-La-Défense-France).

In particular, these zones may be, in the direction of flow of the polyethylene in the extruder from a feed hopper for polyethylene to an exit die for the polyethylene, in succession:
(a) a feed zone which communicates with the feed hopper, in which the polymer is entirely solid, especially in the form of granules or powder, and is conveyed in the solid, more or less compacted, state by the screw(s), this zone being also known by the name of a solid transport zone,
(b) a plasticizing, or melting, zone in which the solid polymer and the molten polymer coexist and which may comprise a zone of kneading blocks, or a compression zone, and optionally a decompression zone, and, finally,
(c) a pumping, or melt transport, zone in which the polymer is completely molten and is conveyed in the molten state, optionally in the presence of means for kneading and shearing, towards an extrusion head consisting essentially of a die which imparts the shape of the desired section to the extruded polymer.

The temperature of the polyethylene at the exit of the extruder, that is to say at the die, may be from 160 to 260°C, preferably from 190 to 250°C, in particular from 200 to 230°C.

The essential feature of the invention is the introduction into the extruder of an inert purging gas, preferably nitrogen, prior to the complete melting of the polyethylene. In fact, when the polyethylene becomes completely melted and is then present in the melt transport zone, the bulk of the molten polyethylene forms a barrier that seals off the flow of any gas. By introducing the inert purging gas into a zone where the polyethylene is not completely melted, the gas mixture produced by the inert purging gas and the reactive gas can then easily flow back countercurrentwise to the flow of the polyethylene. It then makes it possible to purge countercurrentwise the polyethylene which is still partly solid and to degas it while extracting especially the reactive gas such as oxygen. The gas mixture thus flowing back is discharged out of the extruder countercurrentwise to the polyethylene, especially through the solid transport zone and/or the feed hopper. In addition, a supplementary purging inert gas, identical with or different from that introduced into the extruder, may be introduced into the feed hopper.

More particularly, the inert purging gas may be introduced into any part of the extruder or it may escape towards the feed hopper countercurrentwise to the polyethylene. Thus, it may be introduced into any part of the extruder, with the exception of the pumping, or melt transport, zone. The introduction may be carried out at one or more points in the feed, or solid transport, zone of the extruder. It may also be carried out at one or more points in the melting, or plasticizing, zone of the extruder, where the polyethylene is partly melted, but not completely melted. It may also be performed at one or more points, simultaneously in the melting zone and in the solid transport zone. Very advantageously, it may be performed at the end of the solid transport zone, in particular in the second half, preferably in the last third of this transport zone and/or at the beginning of the melting zone, in particular in the first half, preferably in the first third of this melting zone, in the direction of flow of the polyethylene.

In the particular case of an extruder with twin, especially corotative, screws, the introduction of the inert purging gas is preferably carried out in the zone of the kneading blocks, where the polyethylene is gradually melted before reaching its complete melting, or in particular just before this zone, for example in the last half or preferably the last third of the solid transport zone situated just before the zone of the kneading blocks in the direction of flow of the polyethylene. In the case of a single-screw extruder provided with a compression zone, the introduction is advantageously carried out in the compression zone, especially in the first half or preferably the first third of this zone in the direction of flow of the polyethylene, or preferably in the second half or especially the last third of the solid transport zone situated just before the compression zone in the direction of flow of the polyethylene.

Very advantageously, the inert purging gas introduced into the extruder may be preheated to a temperature close to or higher than the melting temperature of the polyethylene, for example to a temperature between the melting temperature of the polyethylene and the temperature of the polyethylene at the point of introduction of the inert purging gas into the extruder, for example a temperature of between 20°C and 260°C, preferably between 130°C and 250°C. The inert purging gas may be introduced at any conventional pressure, for example at a pressure of 0.01 to 20 MPa, preferably of 0.1 to 10 MPa.

According to the process of the invention the polyethylene is subjected to a thermomechanical treatment carried out in the molten state in the extruder in conditions such that the extruder can impart to the polyethylene a specific mechanical energy of 0.15 to 0.5, preferably of 0.17 to 0.30, in particular of 0.18 to 0.22 kWh per kilogram of polyethylene. The specific mechanical energy of the extruder can be generally calculated as the quotient of the effective mechanical power (in kW) of the extruder, divided by the throughput of the polyethylene (in kg/h) in the extruder.

The apparatus for carrying out the process of the invention therefore includes an extruder comprising one, two or several screws arranged inside a barrel, which is provided with a feed conduit for an inert purging gas which passes through the barrel at one or more points and which emerges into a zone where the polymer is not yet completely melted.

More particularly, the feed conduit for inert purging gas may emerge into any part of the extruder with the exception of the pumping, or melt transport, zone. Thus, the extruder may be provided with one or more gas feed conduits which emerge into the feed, or solid transport, zone of the extruder. It may also be provided with one or a number of conduits which emerge into the melting, or plasticizing, zone of the extruder, where the polyethylene is partly melted, but not completely melted. It may also be provided, at the same time, with one or a number of feed conduits which emerge into the melting zone, and with one or a number of conduits which emerge into the solid transport zone. Very advantageously, it may be provided with one or a number of feed conduits which emerge at the end of the solid transport zone, in particular into the second half, preferably the last third of this transport zone and/or at the beginning of the melting zone, in particular into the first half, preferably into the first third of this melting zone, in the direction of flow of the polyethylene.

The feed conduit is advantageously provided with a device for preheating the inert purging gas. The equipment may also advantageously comprise a device for analysis of the gas mixture flowing back, travelling countercurrentwise to the flow of the polyethylene, a device including especially a sampling point for the said gas mixture, situated between the polymer feed hopper and the point(s) of introduction of the inert purging gas, for example in the solid transport zone or the melting zone. The equipment may also advantageously comprise a conduit for venting off the gas mixture which is flowing back, a conduit which passes through the extruder barrel preferably in the solid transport zone, for example near the feed hopper.

It is preferred to employ an extruder with twin, especially corotative, screws, including a feed conduit for inert purging gas which passes through the barrel at one or more points in the zone of the kneading blocks, that is to say before the complete melting of the polyethylene, preferably in the first half or the first third of this zone in the direction of flow of the polyethylene, or preferably the last half or especially the last third of the solid transport zone situated just before the zone of the kneading blocks, in the direction of flow of the polyethylene.

Good results are obtained, furthermore, when the extruder is a granulator converting the powder into granules, especially a twin-screw extruder or granulator, for example a twin-screw extruder without intermeshing of flights, also known by the name of an extruder with twin tangent screws, or else a twin-screw extruder with intermeshing flights and rotating either in the same direction, that is to say with corotative screws, or in opposite directions, that is to say with counterrotative screws. An extruder or granulator with twin corotative screws with intermeshing flights is preferred.

The feed hopper may be a simple hopper in which the polymer flows especially by gravity towards the entry zone of the screw, that is to say towards the entry of the feed zone of the extruder. The hopper may comprise a rotary stirrer system or a vibration device. It is also possible to employ a feed hopper with a forcing device such as a deep-flight forcing screw rotating in the axis of the hopper. It is also possible to employ a feed hopper with a metering device such as an auxiliary screw with constant pitch and channel depths, placed at the bottom of the hopper parallel to the extrusion screw(s), or an oscillating chute or a vibrating chute placed at the bottom of the hopper.

The process is particularly suitable for converting into granules or into finished objects polyethylene powders which have previously been brought into contact with oxygen or air, for example when being degassed, conveyed and/or stored. It is just as suitable for a high-density polyethylene which has a relative density ranging from 0.935 to 0.970, as for a linear low-density polyethylene which has a relative density ranging from 0.900 to 0.935. The polyethylene may be either a homopolyethylene or an ethylene copolymer with at least one alpha-olefin, especially from C₃ to C₈, for example propylene, 1-butene, 1-hexene, 4-methyl-1-pentene or 1-octene. The polyethylene may be prepared by a suspension or, preferably, gas-phase polymerization process. It may be prepared in the presence of a catalyst of the Ziegler-Natta type, based especially on a titanium, vanadium, chromium or zirconium compound, preferably a halogen compound of these metals, or based on a metallocene compound, especially of the transition metals such as titanium, zirconium or hafnium, or else a catalyst based on heat-activated chromium oxide, optionally modified with titanium, aluminium and/or fluorine. It is preferred to employ in particular a polyethylene prepared in a gas-phase polymerization process, especially in a fluidized bed.

The process of the invention can, moreover, make it possible to remove the olefin oligomers which may be present in the polyethylene, in particular when it is obtained by a gas-phase polymerization process. This removal of the oligomers allows the properties of the polyethylene, in particular the organoleptic properties, to be improved.

The polyethylene may have a molecular mass distribution such that the ratio of the weight-average molecular mass, M_{w}, to that based on the number, Mₙ, is from 1 to 40, preferably from 3 to 25. The molecular mass distribution may be of a bimodal type. Furthermore, the polyethylene may have a melt index (MI_{21.6}) measured according to ASTM Standard D-1238, condition F, ranging from 1 to 1500, preferably from 5 to 1000, and in particular from 10 to 500 g/10 minutes. The invention is particularly suitable for extruding linear low-density polyethylenes which have a relative density ranging from 0.900 to 0935 and a melt index (MI_{21.6}) ranging from 10 to 100 g/10 minutes and which are manufactured according to a gas-phase polymerization process.

The process of the invention is suitable especially when the polyethylene is employed in the form of a porous powder which may have an apparent density at rest of 0.30 to 0.55, preferably of 0.33 to 0.55 g/cm³, measured according to ASTM Standard D-1889/89. If a polyethylene in the form of powder consisting of porous particles is employed, the porosity of the polyethylene at ambient temperature (+20°C) may be characterised by a pore volume ranging from 0.05 to 0.4, preferably 0.1 to 0.2 cm³/g, measured by porosity to mercury, and/or by a specific (BET) surface ranging from 0.05 to 1, preferably from 0.1 to 0.5 m²/g. The polyethylene particles may have a mass-average diameter ranging from 300 to 3000 µm, preferably ranging from 500 to 2000 µm, in particular from 600 to 1500 µm.

The present invention makes it possible to reduce the quantity of stabilising agent of antioxidant type which is used, generally known by the name of "process antioxidant" or "short-term antioxidant", such as a phosphite. A relatively small quantity of short-term antioxidant can thus be employed, for example a quantity ranging from 0 to 1000, preferably from 0 to 800 or from 0 to 500, in particular from 0 to 200 parts per million (ppm) by weight relative to the polyethylene. The short-term antioxidant may be introduced into the feed or melting zone of the extruder or preferably into the feed hopper of the extruder.

According to the process of the invention the short-term antioxidant may be brought into contact with the polyethylene when the latter is already in the molten state, in particular after its complete melting and before it leaves the extruder. In this case the short-term antioxidant may be introduced into the pumping, or melt transport, zone of the extruder, especially into the second half of this zone in the direction of flow of the polyethylene, that is to say the one situated towards the outlet of the extruder, in particular towards the die.

Furthermore, the process of the invention may be carried out in the presence of a long-term antioxidant, such as hindered phenols, and of other additives or fillers that are usually employed, such as slip agents, antiblocking agents, antistatic agents, adhesive bonding agents and pigments. It may also be carried out in the presence of 100 to 2000 ppm of zinc stearate, to improve the whiteness of the polyethylene.

The following example illustrates the present invention.

### Example

A linear high-density polyethylene manufactured according to a gas-phase polymerization process, sold under the trade reference "Rigidex HD 5301 FB"® by BP Chemicals and consisting of a copolymer of ethylene and 1-butene in the form of a porous powder, was stored under ambient air.

It was mixed beforehand with the following additives:
- 0.1 % of calcium stearate,
- 0.1 % of zinc stearate,
- 0.1 % of Irganox 1010® sold by Ciba-Geigy, and
- 0.1 % of Irgafos PEPQ® sold by Ciba-Geigy.

The polyethylene thus mixed is fed at a constant rate of 100 kg/h to a granulator with twin corotative screws rotating at 180 revolutions/minute, sold by APV Baker Limited under reference "MP 2065"®. A hole has been provided through the barrel of the granulator to allow a purging nitrogen feed conduit to pass through. The hole is situated on the upper generatrix of the barrel at a distance L measured from the end of the twin screw situated on the side of the feed hopper, such that the ratio L/D is equal to 5.5, D being the nominal diameter of the twin screw. The granulator is provided with kneading blocks starting at a distance l measured from the end of the twin screw situated on the side of the feed hopper, such that the ratio l/D is equal to 6. The purging nitrogen entry is situated in the end of the solid transport zone of the polyethylene, especially in the last third of the solid transport zone in the direction of flow of the polymer, where, for example, less than 1 % of the polymer is in the molten state.

A second hole has been provided in the barrel on the upper generatrix of the granulator at a distance L' measured from the end of the twin screw situated on the side of the feed hopper, such that the ratio L'/D is equal to 1. The second hole allows samples to be taken of the gas mixture flowing back countercurrentwise to the flow of the polyethylene, in order to measure the oxygen content in the said mixture. The percentage by volume of oxygen in the gas mixture flowing back was thus measured at various flow rates of purging nitrogen. The results of the measurements appear in Table 1 and are compared with measurements carried out in identical conditions except for the fact that the purging nitrogen is not introduced into the melting zone of the granulator at L/D = 5.5, but into the feed hopper, level with the twin screw (that is to say at L/D = 0), and according to various nitrogen flow rates. The results from Table 1 are transferred onto a diagram expressing a percentage of oxygen (by volume) in the gas mixture flowing back as a function of the flow rate of purging nitrogen (in Nl/h): in Figure 1 two curves appear, according to the introduction of purging nitrogen carried out either in the melting zone (at L/D = 5.5) according to the invention, or in the feed hopper (at L/D = 0). These curves clearly show that, to obtain a given percentage of oxygen in the gas mixture flowing back, the flow rate of purging nitrogen is approximately two times lower in the process of the present invention than in the comparative process introducing nitrogen into the feed hopper. Furthermore, the organoleptic properties of the polyethylene are improved in the process of the invention.

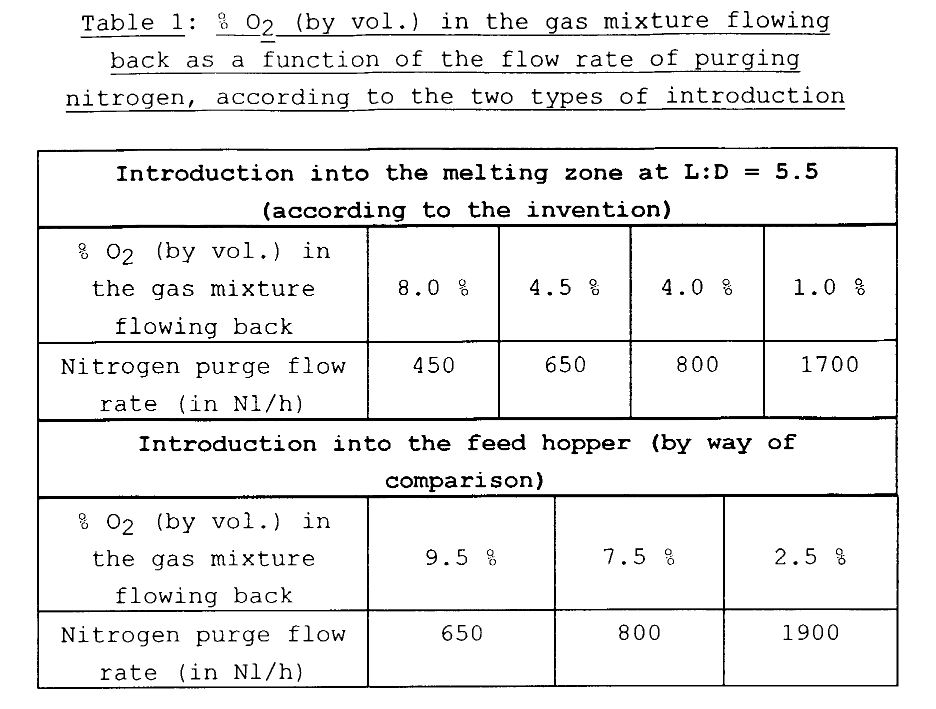

## Claims

1. Process for extruding, under a controlled atmosphere made up of inert gas, a polyethylene mixed with and/or containing a reactive gas liable to react with the polyethylene in the extrusion conditions, in an extruder fed with polyethylene by a feed hopper, a process characterised in that an inert purging gas is introduced into the extruder in a zone where the polyethylene is not completely melted and at a distance from the feed hopper such that the inert purging gas introduced forms a gas mixture with the reactive gas entrained with the polyethylene into the extruder and then flows back in the direction of the feed hopper countercurrentwise to the flow of the polyethylene and is discharged out of the extruder.

2. Process according to Claim 1, characterised in that the inert gas is nitrogen.

3. Process according to either of Claims 1 to 2, characterised in that the inert gas is preheated before being introduced into the extruder to a temperature close to or higher than the melting temperature of the polyethylene.

4. Process according to any one of Claims 1 to 3, characterised in that the inert gas is introduced into the extruder at a pressure which is higher than the atmospheric pressure.

5. Process according to any one of Claims 1 to 4, characterised in that the inert gas is introduced into the solid transport zone and/or into the melting zone of the extruder.

6. Process according to any one of Claims 1 to 4, characterised in that the introduction of inert gas is performed in the last half of the solid transport zone and/or in the first half of the melting zone of the extruder in the direction of flow of the polyethylene.

7. Process according to any one of Claims 1 to 6, characterised in that the polyethylene is a high-density polyethylene which has a relative density ranging from 0.935 to 0.970 or a linear low-density polyethylene which has a relative density ranging 0.900 to 0.935.

8. Process according to any one of Claims 1 to 7, characterised in that the polyethylene is prepared by a gas-phase polymerization process.

9. Process according to any one of Claims 1 to 8, characterised in that the polyethylene is in the form of a porous powder.

10. Process according to any one of Claims 1 to 9, characterised in that the extruder is a twin-screw granulator.
